# FASCICULE DE BREVET EUROPEEN

(11) **EP 3 587 223 B1**
(45) Date de publication et mention de la délivrance du brevet: **22.12.2021**
(21) Numéro de dépôt: 19182915.9
(22) Date de dépôt: 27.06.2019
(51) Int. Cl.: B62D 35/00, B62D 37/02

(54) **VÉHICULE AUTOMOBILE COMPRENANT UN DISPOSITIF DE GUIDAGE D'AIR COMPORTANT UNE PARTIE FIXE ET UNE PARTIE MOBILE**
KRAFTFAHRZEUG, DAS ÜBER EINE LUFTFÜHRUNGSVORRICHTUNG VERFÜGT, DIE EINEN FESTEN UND EINEN BEWEGLICHEN TEIL UMFASST
MOTOR VEHICLE INCLUDING AN AIR GUIDING DEVICE COMPRISING A FIXED PART AND A MOBILE PART

(30) Priorité: 28.06.2018 FR 1855891
(43) Date de publication de la demande: 01.01.2020
(73) Titulaire: Flex-N-Gate France, 25405 Audincourt (FR)
(72) Inventeur: GUYON, Cyrille, 25600 NOMMAY (FR)
(74) Mandataire: Lavoix

(56) Documents cités:
- WO-A1-2016/092165
- DE-A1-102010 037 616
- DE-A1-102016 005 471
- JP-U- S5 774 888
- US-B1- 6 520 564

## Description

La présente invention concerne un véhicule automobile comportant un guidage d'air selon le préambule de la revendication 1.

Le document US 6 520 564 décrit par exemple un tel dispositif de guidage d'air. Un tel dispositif de guidage est par exemple un becquet monté sur le véhicule automobile destiné à guider l'écoulement d'air autour du dispositif de guidage afin d'améliorer les performances aérodynamiques du véhicule automobile.

Le document JP S57 74888 décrit un véhicule automobile selon le préambule de la revendication 1.

Cependant, une telle disposition de guidage d'air est complexe et nécessite de nombreuses pièces (rotules etc.), ce qui rend le système lourd et cher.

L'un des buts de la présente invention est donc de proposer un dispositif de guidage d'air améliorant les performances aérodynamiques à haute vitesse par l'utilisation d'une cinématique très simple, tout en permettant une esthétique satisfaisante à l'arrêt ou à basse vitesse. A cet effet, l'invention a pour objet un véhicule automobile du type précité, selon la partie caractérisante de la revendication 1.

En permettant au dispositif de guider l'écoulement d'air avec chacune de ses surfaces, le dispositif est adapté pour améliorer les performances aérodynamiques quelle que soit la vitesse de déplacement du véhicule automobile, tout en limitant l'encombrement du dispositif. Lorsque le véhicule est à l'arrêt ou à basse vitesse, il dispose d'une esthétique attirante, la performance aérodynamique étant peu importante. A haute vitesse le guidage d'air se déploie, permettant un gain en stabilité et en trainée.

Selon des modes de réalisation particuliers de l'invention, le véhicule automobile présente en outre l'une ou plusieurs des caractéristiques des revendications 2 à 8, prise(s) isolément ou suivant toute(s) combinaison(s) possible(s).

D'autres caractéristiques et avantages de l'invention apparaîtront à la lecture de la description qui va suivre, donnée uniquement à titre d'exemple et faite en se référant aux dessins annexés, dans lesquels :
- la figure 1 est une vue en perspective du dispositif de guidage d'air selon l'invention, la partie mobile occupant la position de repos ; et
- la figure 2 est une vue similaire à la figure 1, la partie mobile occupant la position déployée.

Dans la description, on définit les termes « inférieur », « supérieur », « transversale », « avant », « arrière » selon les directions usuelles d'un véhicule monté, ces termes se référant, le cas échéant, à la position du dispositif de guidage d'air lorsqu'il est monté sur le véhicule. Par la direction transversale, on entend une direction qui s'étend sensiblement perpendiculairement à la direction de déplacement du véhicule. Le terme « intérieur » se réfère à ce qui est tourné vers la caisse du véhicule et le terme « extérieur » à ce qui est tourné vers l'extérieur du véhicule lorsque le dispositif de guidage d'air est monté sur le véhicule.

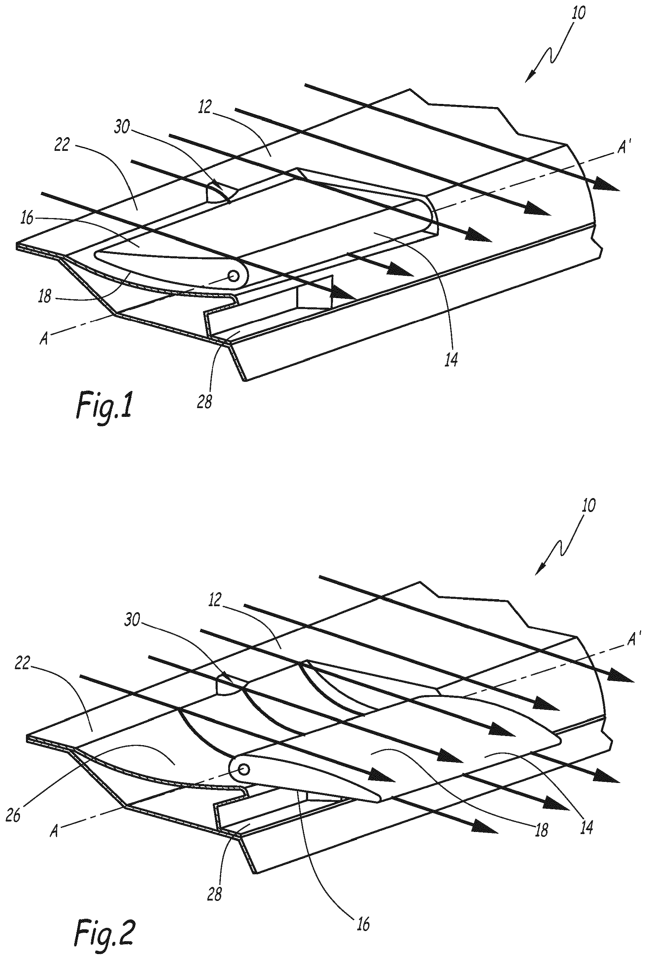

La figure 1 illustre un dispositif de guidage d'air 10 pour un véhicule automobile. Le dispositif de guidage d'air 10 comporte une partie fixe 12 destinée à être fixée au véhicule automobile, et au moins une partie mobile 14 montée sur la partie fixe 12.

La partie fixe 12 est par exemple fixée directement sur le pavillon du véhicule. En variante, elle est fixée sur un hayon.

La partie mobile 14 est montée mobile en rotation autour d'un axe transversal A-A' par rapport à la partie fixe 12 entre une position de repos et une position déployée.

La partie mobile 14 comprend une première surface de guidage d'air 16, et une deuxième surface de guidage d'air 18 sensiblement opposée à la première surface de guidage d'air 16. Par « sensiblement », on entend que la deuxième surface de guidage d'air 18 s'étend complètement en regard de la première surface de guidage d'air 16 ou qu'elle est légèrement décalée par rapport à la première surface de guidage d'air 16 selon la direction avant-arrière.

Lorsque la partie mobile 14 occupe la position de repos, représentée sur la figure 1, la première surface de guidage d'air 16 guide l'écoulement d'air, la première surface de guidage d'air 16 étant tournée vers l'extérieur du véhicule automobile, et la deuxième surface de guidage d'air 18 s'étendant en regard de la partie fixe 12.

Avantageusement, le dispositif de guidage 10 comporte également un ressort de rappel (non-représenté sur les figures) contraignant la partie mobile 14 vers la position de repos, et un dispositif de blocage de position et/ou un dispositif de déblocage de position (non-représenté) de la partie mobile 14.

La partie fixe 12 comprend une surface de guidage d'air 22 configurée pour guider l'écoulement d'air qui s'écoule autour de la partie fixe 12, et un logement 26 configuré pour recevoir la partie mobile 14 lorsque la partie mobile 14 occupe la position de repos. Avantageusement, la partie fixe 12 comprend également un logement supplémentaire 28 configuré pour recevoir un dispositif d'éclairage, par exemple une lumière type feu de freinage central surélevé (ou CHMSL pour « centre high mounted stop lamps » en anglais).

Le logement 26 présente une forme sensiblement complémentaire de la partie mobile 14 de sorte que la partie mobile 14 soit apte à être logée dans le logement 26 sans s'étendre sensiblement en saillie hors du gabarit du véhicule 10.

Selon le mode de réalisation représenté sur les figures, le logement supplémentaire 28 est disposé en-dessous du logement 26.

Selon le mode de réalisation représenté sur les figures, la partie mobile 14 présente une longueur transversale inférieure à la longueur de la partie fixe 12. En variante, le dispositif de guidage 10 comprend plusieurs parties mobiles 14 adjacentes les unes aux autres selon la direction transversale.

L'angle de rotation de la partie mobile 14 entre la position de repos et la position déployée est supérieure à 120°, et avantageusement sensiblement égale à 180°.

La rotation de la partie mobile 14 de la position de repos vers la position déployée est effectuée sous l'effet de l'écoulement d'air autour du véhicule automobile, notamment sous pressions générées par les flux d'air. La partie mobile 14 tourne de la position déployée vers la position de repos lorsque la vitesse du véhicule automobile est inférieure à un seuil prédéterminé non-nul.

Selon un exemple, la partie mobile 14 tourne de la position de repos vers la position déployée lorsque la vitesse du véhicule automobile est supérieure à 60 km/h, et la partie mobile 14 tourne de la position déployée vers la position de repos lorsque la vitesse du véhicule automobile est inférieure à 40 km/h.

Avantageusement et en se référant à la figure 1, lorsque la partie mobile 14 occupe la position de repos, la première surface de guidage d'air 16 s'étend sensiblement dans la continuité de la surface de guidage d'air 22 de la partie fixe 12. Par « dans la continuité », on entend que la première surface de guidage d'air 16 et la surface de guidage d'air 22 de la partie fixe 12 forment ensemble une surface de guidage d'air sensiblement continue et régulière. Cette configuration permet notamment de préserver une esthétique intéressante (permet par exemple l'élimination des jeux présents sur le dispositif de guidage d'air 10 et l'affleurement de la partie fixe 12 par rapport à la partie mobile 14), et de préserver de bonnes performances aérodynamiques du dispositif de guidage 10 lorsque la partie mobile 14 occupe sa position de repos à faible vitesse, sans être dégradée par la présence d'une surface s'étendant en saillie du véhicule et augmentant la traînée du véhicule à faible vitesse, voire d'améliorer la performance du dispositif de guidage 10 grâce à l'aire de guidage d'air supplémentaire formée par la première surface de guidage 16 de la partie mobile 14.

Lorsque la partie mobile 14 occupe la position déployée, représentée sur la figure 2, la deuxième surface de guidage d'air 18 guide l'écoulement d'air, la première surface de guidage d'air 16 s'étendant vers l'intérieur du véhicule automobile, et la deuxième surface de guidage d'air 18 s'étendant vers l'extérieur du véhicule automobile.

De plus, la position déployée de la partie mobile 14 permet l'allongement du dispositif de guidage d'air 10, ce qui améliore sa performance aérodynamique.

Selon un mode de réalisation de l'invention, la première surface de guidage d'air 16 présente une forme sensiblement plate. En variante, elle présente une forme convexe ou concave.

La deuxième surface de guidage d'air 18 présente une forme profilée, permettant un guidage d'air efficace lorsque la partie mobile 14 occupe sa position déployée. Selon l'invention, la deuxième surface de guidage d'air 18 présente une forme concave, ou une forme convexe. La forme de la deuxième surface de guidage d'air 18 est notamment agencée pour améliorer l'adhérence, la stabilité, et la trainée du véhicule lorsqu'il se déplace à vitesse élevée.

Selon le mode de réalisation représenté sur les figures, la partie fixe 12 et/ou la partie mobile 14 comprennent également au moins un guide supplémentaire d'air 30 configuré pour favoriser l'écoulement d'air sous la partie mobile 14 lorsque la partie mobile 14 occupe sa position de repos, de sorte à favoriser le mouvement de la partie mobile 14 entre sa position de repos et sa position déployée lorsque la vitesse du véhicule augmente au-delà d'un seuil prédéfini. Avantageusement, le guide supplémentaire d'air 30 est également apte à améliorer davantage les performances aérodynamiques du dispositif de guidage 10. Le guide supplémentaire d'air 30 est par exemple un embouti, une rainure, ou une ouverture. Il est par exemple disposé sur la surface de guidage d'air 22 de la partie fixe 12, comme visible sur les figures. D'autres configurations de guide(s) supplémentaire(s) d'air 30 sont également possibles.

Avantageusement, la partie fixe 12 et/ou la partie mobile 14 comprend en outre au moins une butée (non-représentée sur les figures) configurée pour réduire du bruit lors de la rotation de la partie mobile 14.

Selon un mode de réalisation de l'invention, cette butée est intégrée dans la partie fixe 12 et/ou dans la partie mobile 14. En variante, la butée est intégrée dans un système de rotation de la partie mobile 14 ou dans le dispositif de blocage en position.

Le dispositif de blocage de position de la partie mobile 14 est par exemple un actionneur apte à transformer l'énergie reçue en un phénomène physique, par exemple un déplacement ou un loquet ou tout autre système mécanique simple. Le dispositif de déblocage de position de la partie mobile 14 est par exemple un système à impulsion, qui permet de réduire la consommation électrique lors du déblocage de la partie mobile 14.

Avantageusement, le dispositif de blocage de position est également apte à maintenir la partie mobile 14 dans au moins une position intermédiaire entre la position de repos et la position déployée. Ceci permet au véhicule automobile d'adapter la position de la partie mobile 14 afin d'obtenir une meilleure performance aérodynamique en fonction de la vitesse du véhicule.

Grâce à l'invention décrite ci-dessus, les performances aérodynamiques du véhicule automobile sont améliorées à hautes vitesses de déplacement du véhicule automobile. En effet, lorsque la partie mobile 14 occupe la position déployée, le dispositif de guidage d'air 10 est allongé, ce qui améliore les performances aérodynamiques du véhicule automobile à des vitesses relativement élevées.

Le dispositif de guidage d'air proposé dans la présente invention améliore les performances aérodynamiques à haute vitesse par l'utilisation d'une cinématique très simple, tout en permettant une esthétique satisfaisante à l'arrêt ou à basse vitesse par une réduction de l'encombrement dudit dispositif de guidage d'air, ce qui permet par exemple l'intégration d'un feu d'arrêt dans la partie fixe.

De plus, la conception du dispositif de guidage d'air 10 reste simple, robuste, et fiable, et présente donc un coût de fabrication réduit.

## Revendications

1. Véhicule automobile comportant un dispositif de guidage d'air (10), le dispositif de guidage d'air (10) comportant :
- une partie fixe (12) destinée à être fixée au véhicule automobile, et
- au moins une partie mobile (14) montée sur la partie fixe (12), la partie mobile (14) étant mobile en rotation par rapport à la partie fixe (12) entre une position de repos et une position déployée, la partie mobile (14) comprenant une première surface de guidage d'air (16) et une deuxième surface de guidage d'air (18), sensiblement opposée à la première surface de guidage d'air (16), la première surface de guidage d'air (16) guidant l'écoulement d'air lorsque la partie mobile (14) occupe la position de repos,
la deuxième surface de guidage d'air (18) guidant l'écoulement d'air lorsque la partie mobile (14) occupe la position déployée,
**caractérisé en ce que** :
- la deuxième surface de guidage d'air (18) présente une forme profilée, permettant un guidage d'air efficace lorsque la partie mobile (14) occupe sa position déployée, la deuxième surface de guidage d'air (18) présentant une forme concave, ou une forme convexe, et
- la rotation de la partie mobile (14) de la position de repos vers la position déployée est effectuée sous l'effet d'un écoulement d'air autour du véhicule automobile lorsque ledit véhicule automobile se déplace, la partie mobile (14) tournant de la position déployée vers la position de repos lorsque la vitesse du véhicule automobile est inférieure à un seuil prédéterminé non-nul, l'angle de rotation de la partie mobile (14) entre la position de repos et la position déployée étant supérieur à 120°, et avantageusement sensiblement égal à 180°.

2. Véhicule automobile selon la revendication 1, dans lequel, lorsque la partie mobile (14) occupe la position de repos, la deuxième surface de guidage d'air (18) s'étend en regard de la partie fixe (12) et la première surface de guidage d'air (16) est tournée vers l'extérieur du véhicule automobile, et lorsque la partie mobile (14) occupe la position déployée, la deuxième surface d'air (18) est tournée vers l'extérieur du véhicule automobile.

3. Véhicule automobile selon l'une quelconque des revendications précédentes, dans lequel la partie fixe (12) comprend une surface de guidage d'air (22) et un logement (26) configuré pour recevoir la partie mobile (14) de sorte que, lorsque la partie mobile (14) occupe la position de repos, la première surface de guidage (16) de la partie mobile (14) s'étend sensiblement dans la continuité de la surface de guidage d'air (22) de la partie fixe (12).

4. Véhicule automobile selon l'une quelconque des revendications précédentes, comportant en outre un ressort de rappel contraignant la partie mobile (14) vers la position de repos.

5. Véhicule automobile selon l'une quelconque des revendications précédentes, comportant en outre un dispositif de blocage de position et/ou un dispositif de déblocage de position de la partie mobile (14).

6. Véhicule automobile selon la revendication 5, dans lequel le dispositif de blocage de position est un actionneur.

7. Véhicule automobile selon la revendication 5 ou 6, dans lequel le dispositif de déblocage est un système à impulsion.

8. Véhicule automobile selon la revendication 1, dans lequel la partie mobile (14) tourne de la position de repos vers la position déployée lorsque la vitesse du véhicule automobile est supérieure à 60 km/h, et la partie mobile (14) tourne de la position déployée vers la position de repos lorsque la vitesse du véhicule automobile est inférieure à 40 km/h.

## Patentansprüche

1. Kraftfahrzeug, umfassend eine Luftleitvorrichtung (10), die Luftleitvorrichtung (10) umfassend:
- einen feststehenden Abschnitt (12), der an dem Kraftfahrzeug befestigt werden soll, und
- mindestens einen beweglichen Abschnitt (14), der an dem feststehenden Abschnitt (12) montiert ist, wobei der bewegliche Abschnitt (14) in Bezug auf den feststehenden Abschnitt (12) zwischen einer Ruheposition und einer entfalteten Position drehbar beweglich ist, der bewegliche Abschnitt (14) umfassend eine erste Luftleitfläche (16) und eine zweite Luftleitfläche (18), im Wesentlichen gegenüber der ersten Luftleitfläche (16), wobei die erste Luftleitfläche (16) den Luftstrom leitet, wenn der bewegliche Abschnitt (14) die Ruheposition einnimmt,
wobei die zweite Luftleitfläche (18), den Luftstrom leitet, wenn der bewegliche Abschnitt (14) die entfaltete Position einnimmt,
**dadurch gekennzeichnet, dass**:
- die zweite Luftleitfläche (18) eine profilierte Form aufweist, die ein effizientes Leiten der Luft ermöglicht, wenn der bewegliche Abschnitt (14) in seiner entfalteten Position ist, wobei die zweite Luftleitfläche (18) eine konkave Form oder eine konvexe Form aufweist, und
- die Drehung des beweglichen Abschnitts (14) aus der Ruheposition in die entfaltete Position unter der Wirkung einer Luftströmung um das Kraftfahrzeug herum erfolgt, wenn das Kraftfahrzeug in Bewegung ist, wobei der bewegliche Abschnitt (14) von der entfalteten Position in die Ruheposition dreht, wenn die Geschwindigkeit des Kraftfahrzeugs unter einem vorbestimmten Schwellenwert ist, der nicht Null ist, wobei der Drehwinkel des beweglichen Abschnitts (14) zwischen der Ruheposition und der entfalteten Position größer als 120° und vorteilhafterweise im Wesentlichen gleich wie 180° ist.

2. Kraftfahrzeug nach Anspruch 1, wobei, wenn der bewegliche Abschnitt (14) die Ruheposition einnimmt, sich die zweite Luftleitfläche (18) gegenüber dem feststehenden Abschnitt (12) erstreckt und die erste Luftleitfläche (16) der Außenseite des Kraftfahrzeugs zugewandt ist, und wenn der bewegliche Abschnitt (14) die entfaltete Position einnimmt, die zweite Luftleitfläche (18) der Außenseite des Kraftfahrzeugs zugewandt ist.

3. Kraftfahrzeug nach einem der vorherigen Ansprüche, wobei der feststehende Abschnitt (12) eine Luftleitfläche (22) und eine Aufnahme (26) umfasst, die konfiguriert ist, um den beweglichen Abschnitt (14) aufzunehmen, sodass, wenn der bewegliche Abschnitt (14) die Ruheposition einnimmt, sich die erste Leitfläche (16) des beweglichen Abschnitts (14) im Wesentlichen in Kontinuität mit der Luftleitfläche (22) des feststehenden Abschnitts (12) erstreckt.

4. Kraftfahrzeug nach einem der vorherigen Ansprüche, ferner umfassend eine Rückholfeder, die den beweglichen Abschnitt (14) in die Ruheposition zwingt.

5. Kraftfahrzeug nach einem der vorherigen Ansprüche, ferner umfassend eine Positionsverriegelungsvorrichtung und/oder einer Positionsentriegelungseinrichtung des beweglichen Abschnitts (14).

6. Kraftfahrzeug nach Anspruch 5, wobei die Positionsverriegelungsvorrichtung ein Stellglied ist.

7. Kraftfahrzeug nach Anspruch 5 oder 6, wobei die Entriegelungseinrichtung ein Impulssystem ist.

8. Kraftfahrzeug nach Anspruch 1, wobei sich der bewegliche Abschnitt (14) aus der Ruheposition in die entfaltete Position dreht, wenn die Geschwindigkeit des Kraftfahrzeugs höher als 60 km/h ist, und sich der bewegliche Abschnitt (14) aus der entfalteten Position in die Ruheposition dreht, wenn die Geschwindigkeit des Kraftfahrzeugs niedriger als 40 km/h ist.

## Claims

1. A motor vehicle comprising an air guiding device (10), the air guiding device (10) comprising:
- a fixed part (12) intended to be fixed to the motor vehicle, and
- at least one moveable part (14) mounted on the fixed part (12), the moveable part (14) being rotatable relative to the fixed part (12) between a rest position and a deployed position, the moveable part (14) comprising a first air guiding surface (16) and a second air guiding surface (18), substantially opposite the first air guiding surface (16), the first air guiding surface (16) guiding the flow of air when the moveable part (14) is in the rest position,
the second air guiding surface (18) guiding the flow of air when the moveable part (14) occupies the deployed position,
**characterized in that**:
- the second air guiding surface (18) has a profiled shape, allowing effective air guiding when the movable part (14) occupies its deployed position, the second air guiding surface (18) having a concave shape, or a convex shape, and
- the rotation of the moveable part (14) from the rest position toward the deployed position is done under the effect of a flow of air around the motor vehicle when said motor vehicle moves, the moveable part (14) rotating from the deployed position to the rest position when the speed of the motor vehicle is below a predetermined non-nil threshold, the rotation angle of the moveable part (14) between the rest position and the deployed position being greater than 120°, and advantageously substantially equal to 180°.

2. The motor vehicle according to claim 1, wherein, when the moveable part (14) occupies the rest position, the second air guiding surface (18) extends opposite the fixed part (12) and the first air guiding surface (16) faces the outside of the motor vehicle, and when the moveable part (14) occupies the deployed position, the second air guiding surface (18) faces the outside of the motor vehicle.

3. The motor vehicle according to any one of the preceding claims, wherein the fixed part (12) comprises an air guiding surface (22) and a housing (26) configured to receive the moveable part (14) such that, when the moveable part (14) is in the rest position, the first guiding surface (16) of the moveable part (14) extends substantially in the continuation of the air guiding surface (22) of the fixed part (12).

4. The motor vehicle according to any one of the preceding claims, further comprising a return spring constraining the moveable part (14) toward the rest position.

5. The motor vehicle according to any one of the preceding claims, further comprising a position blocking device and/or a position unblocking device of the moving part (14).

6. The motor vehicle according to claim 5, wherein the position blocking device is an actuator.

7. The motor vehicle according to claim 5 or 6, wherein the unblocking device is an impulse system.

8. The motor vehicle according to claim 1, wherein the moveable part (14) rotates from the rest position toward the deployed position when the speed of the motor vehicle is greater than 60 km/h, and the moveable part (14) rotates from the deployed position toward the rest position when the speed of the motor vehicle is less than 40 km/h.
